# EUROPÄISCHE PATENTSCHRIFT

(11) **EP 1 275 527 B1**
(45) Veröffentlichungstag und Bekanntmachung des Hinweises auf die Patenterteilung: **09.02.2005**
(21) Anmeldenummer: 02013037.3
(22) Anmeldetag: 13.06.2002
(51) Int. Cl.: B60C 11/00

(54) **Laufflächenprofil für einen Fahrzeugreifen, Stift als Vorrichtung zur Herstellung eines solchen Laufflächenprofils und Vulkanisationsform mit einem solchen Stift**
Tread profile for a tyre, pin for the manufacture of such a tread profile and a mold with such a pin
Bandage pneumatique, une tige pour la production du bandage pneumatique et un moule avec la tige

(30) Priorität: 10.07.2001 DE 10133430
(43) Veröffentlichungstag der Anmeldung: 15.01.2003
(73) Patentinhaber: Continental Aktiengesellschaft, 30165 Hannover (DE)
(72) Erfinder: Goris, Achillefs, 31535 Neustadt (DE); Doporto, Mario, Dr., 30419 Hannover (DE); Neumann, Axel, Dr., 31559 Hohnhorst (DE); Kleinhoff, Klaus, 31552 Rodenberg (DE)

(56) Entgegenhaltungen:
- DE-C- 183 380
- FR-A- 2 548 097
- GB-A- 251 851
- GB-A- 751 641
- GB-A- 2 061 837
- US-A- 1 386 513
- US-A- 1 604 450
- US-A- 5 924 464

## Beschreibung

Die Erfindung bezieht sich auf ein Laufflächenprofil für einen Fahrzeugreifen gemäß dem Oberbegriff des Patentanspruches 1.

Ein gattungsgemäßes Laufflächenprofil beinhaltet eine oder mehrere Napfreihen (X und/oder XI, XII, XIII, XIV, XV, und/oder XVI und/oder XVII und/oder XVIII und/oder XIX),
- wobei jede Napfreihe (X, XI, XII, ... XIX) einen oder mehrere Näpfe
   (10a, 10b, 10c, 10d, ...;
   11a, 11b, 11c, 11d, 11e; 11f;
   12a, 12b, 12c, 12d, 12e, 12f;
   .....
   19a, 19b, 19c, 19d) aufweist,
- wobei ein jeder Napf (10a, 10b, ... 19c, 19d) ein Profilnegativ von einer Breite (b) oder Durchmesser (d) ist, die höchstens das 2-fache - bevorzugt etwa das 1,2-fache - der Profiltiefe (t) beträgt, wobei diese Breite (b) bzw. dieser Durchmesser (d) in der Ebene der Laufflächenperipherie zur Hauptlinie (10., 11, 12, ..., 19) der jeweiligen Napfreihe (X, XI, XII, ..., XIII) zu messen ist,
- wobei die Länge (1) eines jeden Napfes (10a, 10b, ..., 19c, 19d) entlang der jeweiligen Hauptlinie (10, 11, ..., 19) höchstens das 4-fache - bevorzugt das 1,5-fache der Profiltiefe (t) beträgt,
- wobei die Tiefe (t) besagter Näpfe (10a, 10b, ..., 19c, 19d) etwa der üblichen Profiltiefe für die jeweilige Reifenkategorie entspricht (dabei soll "etwa" +/- 20 % heißen, und
- wobei und wobei die Querschnittsfläche eines jeden solchen Kanals (20,21, ..., 29), welche senkrecht zur Hauptlinie (10, 11, ...., 19) der jeweiligen Napfreihe (X, XI,...., XIX) zu messen ist, zwischen 10 % und 50 % der Querschnittsfläche der jeweils anschließenden Näpfe (10a, 10b,....,19c, 19d) beträgt.

Ein Laufflächenprofil der eingangs genannten Art ist beispielsweise aus der US 5,924,464 A bekannt. Dieses Profil weist in Umfangsrichtung umlaufende Hauptnuten und im Wesentlichen in Querrichtung verlaufende Nebennuten auf. Zur Verbesserung der Traktionseigenschaften des Laufstreifens auf Nässe ist vorgesehen, die Nebennuten mittig aufzuweiten und mit schmäleren Abschnitten in die Umfangsnuten einmüden zu lassen. Aus der FR 2 548 097 A ist es bekannt, Laufstreifen mit in Reihen angeordneten Näpfen zu versehen, welche miteinander durch Kanäle verbunden sind. Bei dem aus der GB 2 061 837 A bekannten Laufstreifen ist die Querschnittsfläche der Kanäle größer als 50 % der Querschnittsfläche der Näpfe, der FR 2 548 097 A ist diesbezüglich nichts Konkretes zu entnehmen.

Ein weiteres Reifenprofil mit Näpfen ist aus der Figur 1 der DE 42 22 614 A bekannt. Aus der EP 0 686 517 B1 ist ein insbesondere für Sattelauflieger geeignetes Reifenprofil bekannt, welches in einem fahrzeugäußeren Profilsteg solche Negative aufweist, die im Sprachgebrauch vorliegender Anmeldung als "Näpfe" - anzusprechen sind. Die Näpfe sind in Reihen angeordnet. Diesbezüglich ähnlich sind die Figuren 1 und 3 aus der DE-QS 38 15 829 A und die Werbung aus der Zeitschrift "Gummi Bereifung", Ausgabe September 1988, Seite 21.

Aus der GB 419,761 B ist ein Laufstreifen mit inneren, langgestreckten abgeschlossenen Hohlräumen bekannt.

Die EP 0 342 908 A lehrt, einen Querrillen-Auslauf an der fahrzeugäußeren Schulter mit einem Gummisteg zu überbrücken.

Die EP 0 540 340 A offenbart Einschnitte in Reifenlaufflächen, die in ihrem Grunde dicker sind als an der Reifenperipherie.

Die Erfinder haben sich die Aufgabe gestellt, ein solches Laufflächenprofil anzugeben, das einerseits hervorragende Griffigkeit auf nasser Straße und eine sehr hohe Grenzgeschwindigkeit für Aquaplaning aufweist, andererseits aber auch eine optimale Griffigkeit auf trockener Straße bei nur geringem Abrieb zur Verfügung stellt.

Zusammen mit den Merkmalen des Oberbegriffes des Patentanspruches 1 wird die Aufgabe erfindungsgemäß durch die kennzeichnenden Merkmale des Patentanspruches 1 gelöst, also dadurch, dass der Kanal eine trapezförmig Querschnittsfläche aufweist, wobei die beiden parallelen Trapezseiten parallel zur Peripherie der Lauffläche verlaufen und die kleinere der beiden parallelen Trapezseiten entweder der Peripherie der Lauffläche näher liegt oder an dieser liegt.

Damit wird eine widerstandsarme Luftabfuhr aus Näpfen bei einem möglichst geringen Positivflächenverlust geschaffen. Mit den konventionellen Methoden der Reifenformgebung und der Reifenentformung lässt sich dieser Weg etwa so weit beschreiten, wie die kürzere der beiden parallelen Trapezseiten mindestens 45 % der Länge der längeren der beiden parallelen Trapezseiten hat, wenn die beiden Querschnitts-Ecken an der längeren der beiden Trapezseiten sorgfältig verrundet sind zur Vermeidung von Kerbwirkungen.

Der Lösung liegt die Erkenntnis der Erfinder zugrunde, dass Näpfe - besonders solche, die in der Draufsicht etwa kreisförmig sind - bei Fahrt auf nasser Straße zwar - aufgrund ihres besonderen Widerstandes gegen einströmendes Wasserschon bei kleiner Bemessung rasch Wasser aufzunehmen vermögen, diese Näpfe jedoch das Problem haben, in ihrer Wasseraufnahmekapazität überraschend schnell zu versagen. Bei vergleichbarem Negativflächenanteil in der Draufsicht auf einen profilierten Reifen zeigen sich napfförmige Negative in ihrem Nassgriff nur bei sehr geringen Wasserstandhöhen rillenförmigen Negativen überlegen, bei großen Wasserstandhöhen jedoch deutlich unterlegen,

Die Erfinder haben erkannt, dass die anfangs so aufnahmewilligen Näpfe die Aufnahme weiteren Wassers zu einem Zeitpunkte weitgehend verweigern, wo sie erst zu etwa einem Drittel mit Wasser angefüllt sind. Die Erfinder haben ferner erkannt, dass hierfür der ansteigende Druck der in den Näpfen verbleibenden Luft verantwortlich ist. Die Kernidee der Erfindung ist also, der Luft Kanäle zum Entweichen anzubieten, sodass die Näpfe sich vollständig mit Wasser füllen können.

Weil die Fließwilligkeit von Luft höher ist als die von Wasser, darf nach Erkenntnis der Erfinder der im Wesentlichen der Entlüftung dienende Kanal zwischen zwei Näpfen eine kleinere Querschnittsfläche haben als es die Näpfe selber haben. Und dieser Kanal muss auch eine deutlich kleinere Querschnittsfläche haben, um dem Laufflächenprofil einen möglichst großen Positivflächenanteil erhalten zu können, der die Griffigkeit auf trockener Straße steigert und den Profiltiefenverlust über der Laufleistung senkt. Darum beträgt die Querschnittsfläche der Kanäle im erfindungsgemäßen Laufflächenprofil höchsten 50 % der Napfquerschnittsfläche, besonders bevorzugt etwa 25 %. Als Untergrenze sind 10 % festgelegt.

Es versteht sich, dass die Kanäle ihren Zweck besonders perfekt dann erfüllen, wenn sie in einem kompressionsfreien Raum enden. Dazu sollten die Kanäle entweder bis zu einer Reifenschulter reichen, oder in eine Umfangsrille münden oder selber den gesamten Reifenumfang umfassen. Dabei scheint die letzte Lösung zumindest für Näpfe im Laufflächenmittenbereich die günstigste zu sein.

Die beste Lösung der gestellten Aufgabe haben die Erfinder dadurch erreicht, dass sie dem zuvor angerissenen Wege bis zu seinem Extrem gefolgt sind, bei dem die Kanalbreite an der Laufflächenperipherie zu Null gesetzt ist. Dies führt dann zu einem Laufflächenprofil gemäß Anspruch 2, das dadurch gekennzeichnet ist, dass der Kanal, der die Näpfe einer Napfreihe miteinander verbindet, nur unten, also in der Nähe der vollen Profiltiefe, existiert, wohingegen oben, also in der Nähe der Peripherie der profilierten Lauffläche, die Näpfe einer Napfreihe als voneinander isoliert, also als Sacknegative erscheinen.

Ein so erzeugtes Reifenprofil mit oberflächlich isolierten Negativen belässt dem verbleibenden, zusammenhängenden Positiv die maximal mögliche Steifigkeit, was eine besonders weiche und haftungsfreudige Gummimischung ohne Handlings-Nachteile erlaubt. Überdies gestattet eine solche Profilgestalt auch die Verwendung relativ hysteresereicher und damit im Nassgriff besonders günstiger Mischungen, weil die die Näpfe entlüftenden Kanäle auch eine beträchtliche Kühlwirkung wegen der durchströmenden Luft erreichen. Zudem ist diese Kühlwirkung genau an der kritischsten Stelle, nämlich der Mitte der Positivwurzel an der Base, konzentriert.

Bei einer von außen unsichtbaren, quasi "unterirdischen" Verbindung zwischen benachbarten Näpfen, unabhängig davon, wo sich diese Näpfe befinden (insbesondere brauchen sie nicht an den Laufflächenrändern zu liegen) und unabhängig davon, in welcher Richtung sich die Reihen so miteinander verbundener Näpfe erstrecken, wurde auch erkannt, dass solche Napfreihen kreuzend zu an sich bekannten Profilrillen angeordnet werden können und dabei zweckmäßigerweise an jeder Kreuzungsstelle ein Napf angeordnet wird, der dann wie eine Rillenerweiterung aussieht. An einer jeden solchen Kreuzungsstelle sind dann die an sich bekannten "oberirdischen" Profilrillen mit den neuartigen "unterirdischen" verbunden. So wie in einer Straßenentwässerung Gullys die Verbindung zwischen den oberirdischen Gossen und Rinnen zu den unterirdischen Kanälen schaffen, so stellen hier die Näpfe eine analoge Verbindung her. Dabei sind gemäß Anspruch 3 zwei Ausführungen besonders bevorzugt, nämlich
- dass es in an sich bekannter Weise Querrillen enthält und zusätzlich im Wesentlichen in Umfangsrichtung verlaufende Kanäle, die diese Querrillen kreuzen und nur unten in der Nähe der vollen Profiltiefe existieren, wobei an jeder Kreuzungsstelle zwischen einem solchen Kanal und einer solchen Querrille ein Napf angeordnet ist, oder
- dass es in an sich bekannter Weise Längsrillen enthält und zusätzlich im Wesentlichen in axialer oder diagonaler Richtung verlaufende Kanäle, die diese Längsrillen kreuzen und nur unten in der Nähe der vollen Profiltiefe existieren, wobei an jeder Kreuzungsstelle zwischen einem solchen Kanal und einer solchen Längsrille ein Napf angeordnet ist.

In jeder Reifenkategorie sollte die Tiefe der erfindungsgemäß erzeugten Näpfe in der gleichen Größenordnung liegen, wie auch bislang die größte Tiefe der Laufflächenprofilierung liegt. Auf diese Weise werden keine Änderungen in der Halbzeugfertigung und -zulieferung erforderlich, wenn in einer Reifenfertigungslinie von einer konventionellen rilligen Laufflächenprofilierung auf eine erfindungsgemäße umgestellt wird. Dementsprechend sollte die Tiefe (t) der Näpfe (10a, 10b, '... 13d, 13e) bei Verwendung an Reifen
für leichte Motorräder bis ca. 125 ccm ca. 4 mm,
für mittelschwere Motorräder bis ca. 350 ccm ca. 5,5 mm,
für schwere Motorräder ca. 7 mm,
für PKW- und Transporter-Reifen ca. 8mm, für Leicht-LKW-Reifen ca. 13 mm und
für schwere LKW-Reifen 15 bis zu ca. 18 mm
betragen. Diese Werte beziehen sich auf eine Verwendung der -Reifen auf befestigten Straßen. Für eine Verwendung der erfindungsgemäßen, entlüftete Näpfe enthaltenden Profile im Gelände empfehlen sich größere Napf tiefen, und zwar - je nach Steilheit und Matschigkeit des Geländes um bis zu 50 % größere Napftiefen.

Dabei versteht es sich, dass mit zunehmender Profiltiefe auch die entlüftenden Kanalquerschnitte größer werden sollten. Im Zusammenhang mit der gemäß Anspruch 2 besonders bevorzugten Ausführung, wo die entlüftenden Kanäle ausschließlich "unterirdisch" liegen ähnlich der Abwasser-Kanalisation einer Stadt, also von außen nicht sichtbar sind, haben die grundnahen Kanäle vorzugsweise eine Höhe, das heißt eine Erstreckung in der radialen Richtung des Reifens, von 15% bis 35% der Napftiefe und eine Breite von 20% bis 80% der Napftiefe. Besonders bevorzugt haben sie eine Höhe von 25 % und eine Breite von 60 % der Napftiefe.

Die Erfindung wird nachfolgend anhand einiger Figuren näher erläutert. Es zeigt:

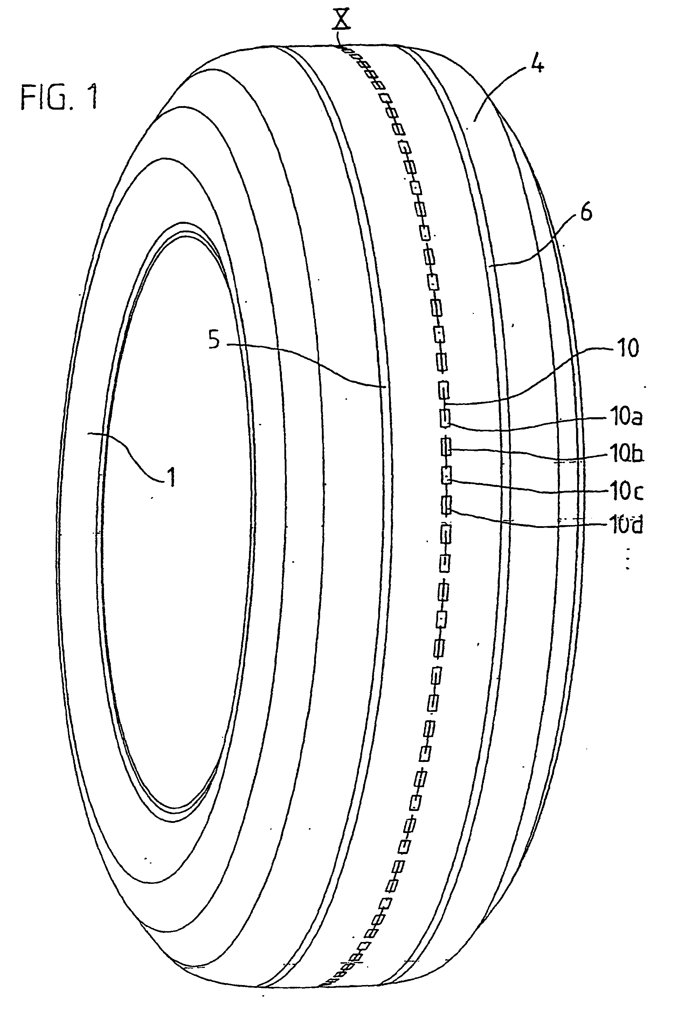

- Figur 1: maßstabsgerecht einen ersten Fahrzeugreifen mit einem erfindungsgemäßen Laufflächenprofil, das in der Mitte eine Napfreihe beinhaltet, wobei diese Näpfe alle miteinander durch in Umfangsrichtung verlaufende Kanäle verbunden sind,

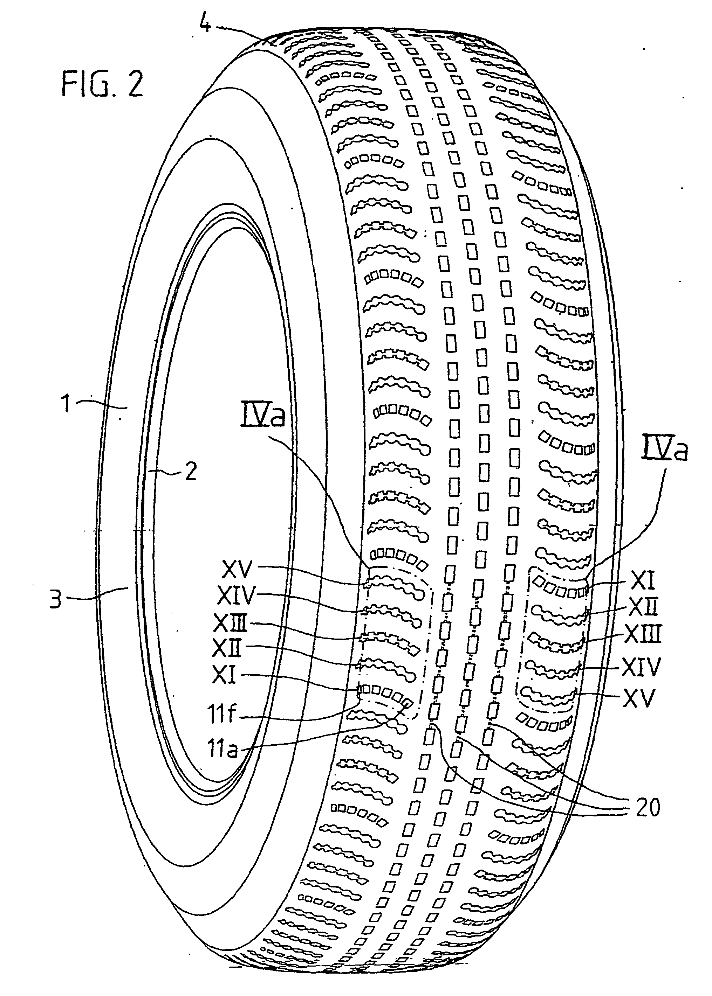

- Figur 2: maßstabsgerecht einen anderen Fahrzeugreifen, nämlich einen Fahrzeugluftreifen für PKW mit einem erfindungsgemäßen Laufflächenprofil, das ausschließlich Napfreihen beinhaltet und zwar im Laufflächenmittenbereich mehrere der Napfreihen, von denen Figur 1 bereits eine gezeigt hat und in beiden Schulterbereichen mehrere im Wesentlichen axial verlaufende Napfreihen mit verschiedenen Kanalausführungen zwischen diesen Näpfen,

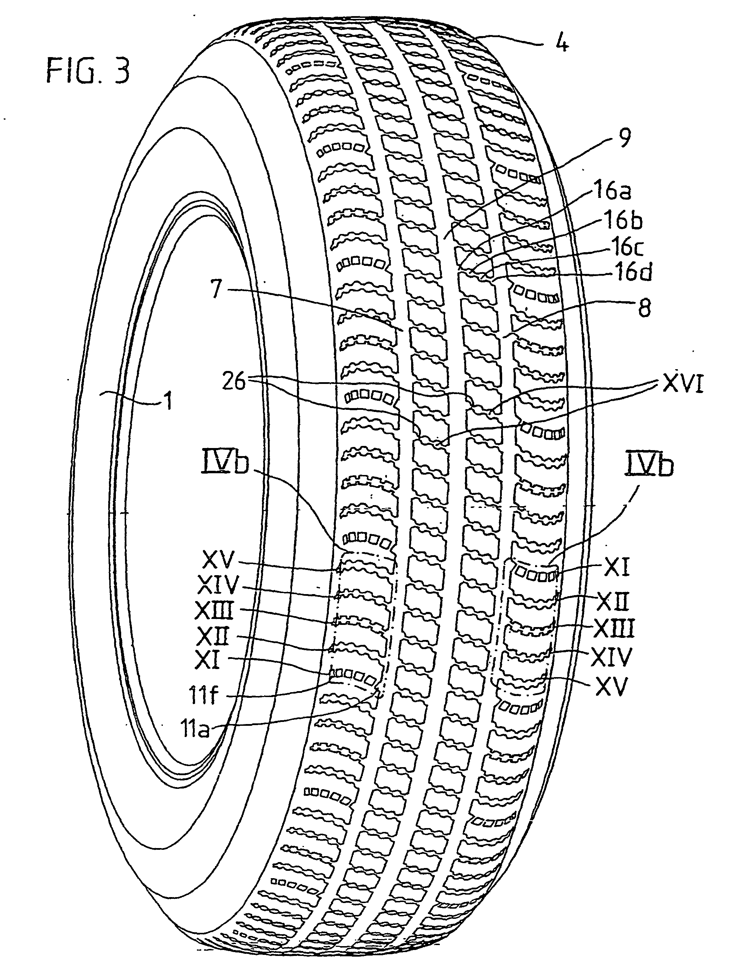

- Figur 3: maßstabsgerecht einen anderen Fahrzeugluftreifen für PKW mit einem erfindungsgemäßen Laufflächenprofil, welches in beiden Schulterbereichen mit der Ausführung gemäß Figur 2 übereinstimmt, im Laufflächenmittenbereich jedoch im Wesentlichen axial ausgerichtete Napfreihen aufweist, die in drei konventionelle Umfangsrillen münden,

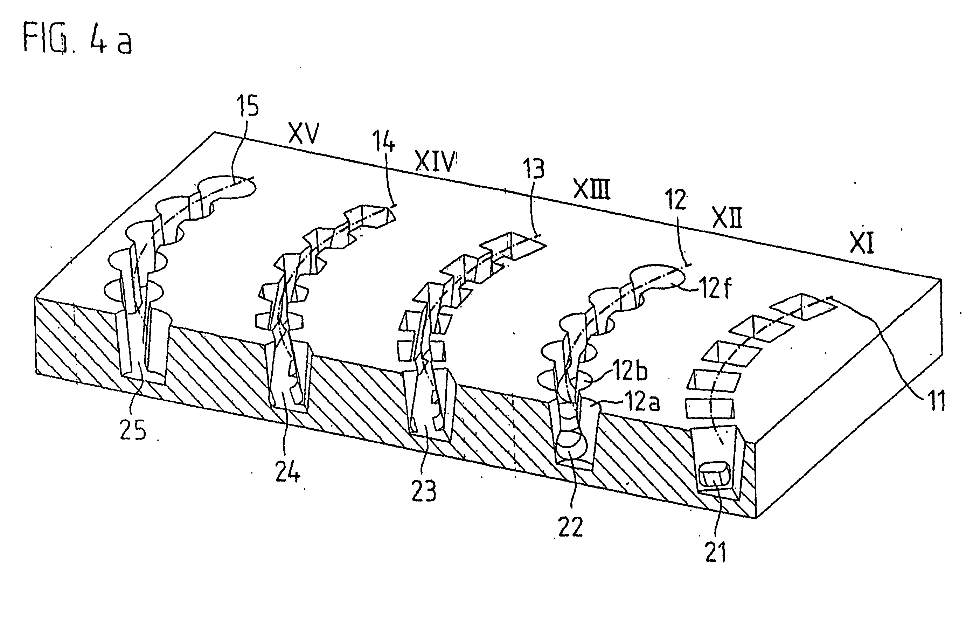

- Figur 4a: in einem vergrößerten Maßstabe eine Periodenlänge eines äußeren Positivstreifens gemäß Figur 2 in einem Längsschnitt mit einer Blickrichtung von oben (=radial außen) und axial außen,

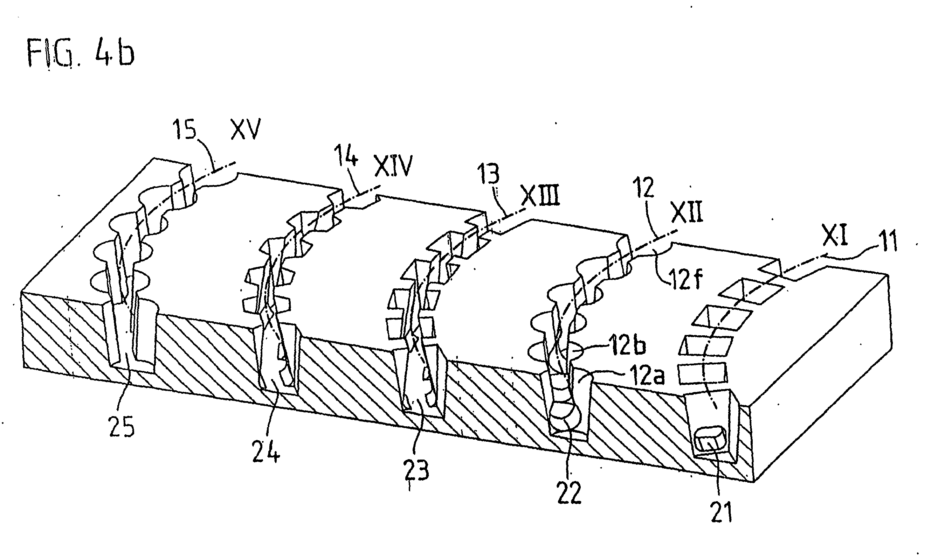

- Figur 4b: in einem vergrößerten Maßstabe eine Periodenlänge eines äußeren Positivstreifens gemäß Figur 3 in einem Längsschnitt mit einer Blickrichtung von oben (=radial außen) und axial außen,

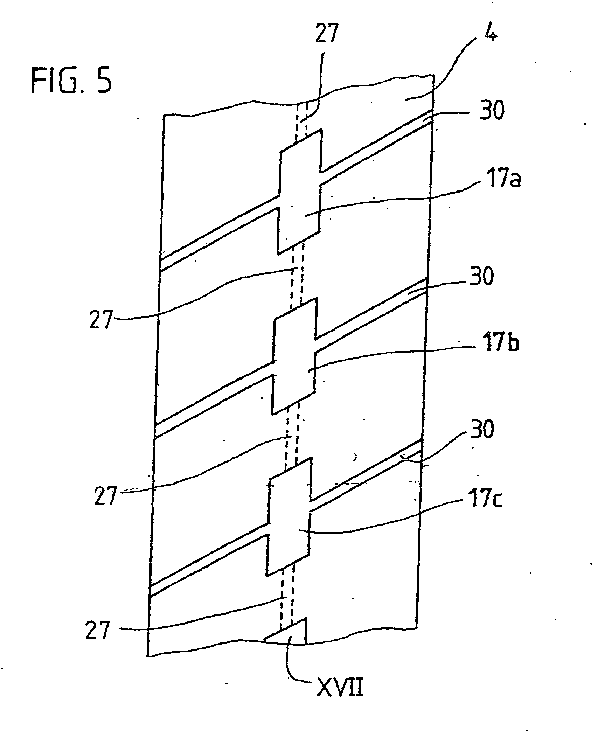

- Figur 5: ausschnittsweise eine Abwicklung eines anderen erfindungsgemäßen Laufstreifenprofiles, bei dem eine Schar an sich bekannter Querrillen von einem in Umfangsrichtung verlaufenden, durchgehenden Strang aneinander anschließender Kanäle gekreuzt werden und an jeder Kreuzungsstelle je ein Napf angeordnet ist,

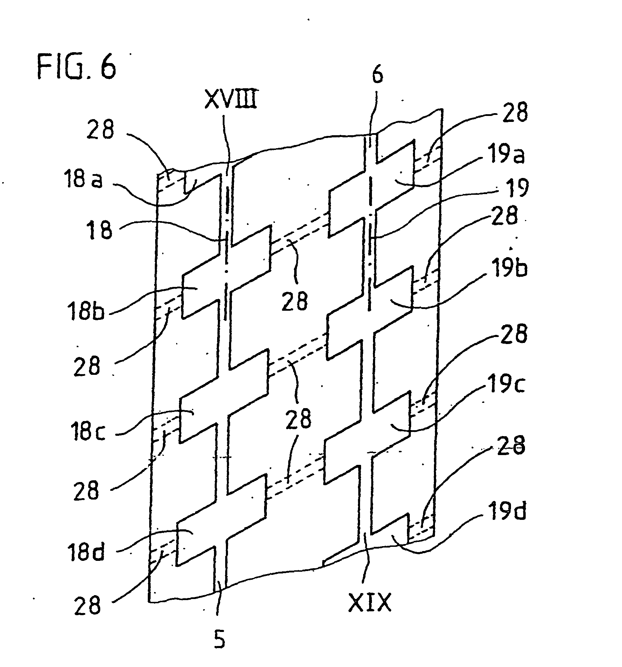

- Figur 6: ausschnittsweise eine Abwicklung eines anderen erfindungsgemäßen Laufstreifenprofiles, bei dem zwei an sich bekannte Längsrillen von einer Schar in diagonaler Richtung verlaufender, durchgehender Stränge aneinander anschließender Kanäle gekreuzt werden und an jeder Kreuzungsstelle je ein Napf angeordnet ist,

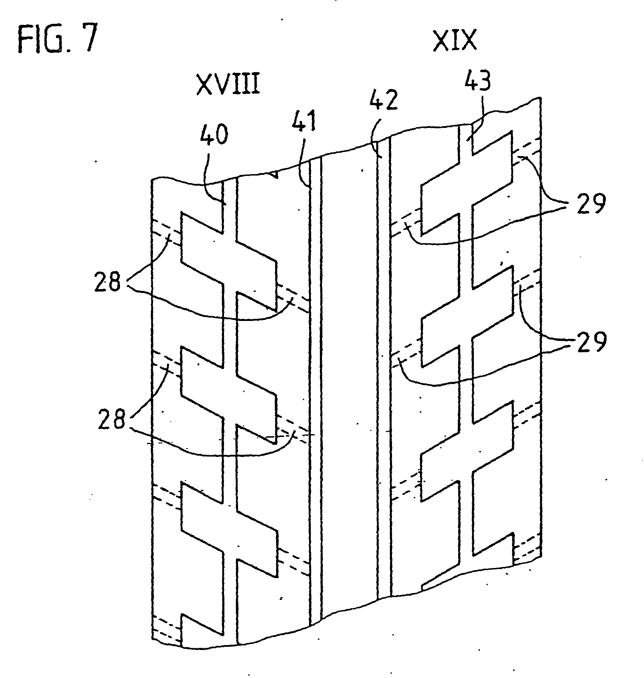

- Figur 7: ausschnittsweise eine Abwicklung eines anderen erfindungsgemäßen Laufstreifenprofiles mit vier an sich bekannten Längsrillen, wobei die beiden linken Längsrillen durch eine linke Schar diagonal verlaufender, durchgehender Stränge aneinander anschließender Kanäle mit dem linken Rand der Lauffläche verbunden sind und nur an den Kreuzungsstellen dieser Kanalstränge mit der ganz linken Umfangsrille je ein Napf angeordnet ist, und wobei die beiden rechten Längsrillen durch eine rechte Schar diagonal verlaufender, durchgehender Stränge aneinander anschließender Kanäle mit dem rechten Rand der Lauffläche verbunden sind und nur an den Kreuzungsstellen dieser Kanalstränge mit der ganz rechten Umfangsrille je ein Napf angeordnet ist.

Figur 1 zeigt maßstabsgerecht einen ersten Fahrzeugreifen 1 und zwar einen Vollreifen, wie er nicht nur an Flurförderfahrzeugen sondern auch an Fahrzeugen für Seehäfen, Binnenhäfen, Flughäfen und Bahnhöfen, insbesondere Gabelstaplern oder Anhängern, Verwendung finden kann. Solche Fahrzeuge fahren auch oder gar vorwiegend auf unbedachten Flächen. Zwecks Wendigkeit und Kompaktheit werden sehr hohe Tragfähigkeiten pro Bauraum, gute Griffigkeit zur Erklimmung auch nasser Rampen und lange Lebensdauer zur Begrenzung des Erhaltungsaufwandes und der Stillstandzeiten erwartet. Zur Erfüllung der Griffigkeitsanforderungen ist es üblich, den Laufstreifen zu profilieren. Der dabei hinzunehmende Positivverlust reduziert aber die Tragfähigkeit und die Lebensdauer.

Diesen Konflikt entspannt das erfindungsgemäße Profil der Lauffläche 4 in deren Mitte: Dort ist eine Napfreihe X angeordnet. Deren Näpfe 10a, 10b, 10c, usw. sind alle miteinander durch in Umfangsrichtung verlaufende, hier nicht sichtbare Kanäle miteinander verbunden. Diese Kanäle sind in dieser Ansicht deshalb nicht sichtbar, weil sich radial außerhalb dieser Kanäle - und dies ist besonders wichtig-Laufflächengummi befindet. Dadurch weist dieser Reifen 1 in dieser besonders hoch beanspruchten Zone einen besonders großen Positivanteil auf und hat dennoch ein hohes Drainage-Vermögen.

Diese Kanäle verlaufen alle längs der dicken strichpunktierten Linie 10, die im Rahmen dieser Anmeldung auch als "Hauptlinie" bezeichnet wird, entlang derer auch die Näpfe 10a, 10b, 10c, 10d usw. zu einer Napfreihe ähnlich wie die Perlen einer Kette aufgereiht sind. Die die Näpfe 10a, 10b, 10c, 10d usw. entlüftenden und dadurch zur Wasseraufnahme bereiter machenden Kanäle liegen also alle in einer Flucht; darum wird im Rahmen dieser Anmeldung auch von einem Strang von Kanälen gesprochen.

Durch ein Aufschneiden ist ein solcher in die radial innere Zone der Lauffläche versenkter, also in die Nähe des Profilgrundes angeordneter napfentlüftender Kanal in den später noch ausführlicher beschriebenen Figuren 4a und 4b ganz rechts sichtbar gemacht.

Eine Vulkanisationsform zur Herstellung eines Reifens 1 nach Figur 1 ist übrigens in Figur 8 im Längsschnitt dargestellt.

Ferner weist dieses Laufflächenprofil eine links von der Napfreihe X angeordnete Umfangsrille 5 und eine rechts von der Napfreihe X angeordnete Umfangsrille 6 auf. Bei höheren Traktionsanforderungen können selbstverständlich diese konventionellen Umfangsrillen 5, 6 durch an sich bekannte Querrillen ersetzt werden oder - noch besser - durch weitere Napfreihen. Eine ganz extreme Traktionsgriffigkeit lässt sich erreichen, wenn in den Schultern im Wesentlichen axial verlaufende Napfreihen angeordnet sind; diese Überlegung leitet zu einer Ausführung gemäß der nächsten Figur:

Figur 2 zeigt maßstabsgerecht einen Fahrzeugluftreifen 1 für PKW mit Wülsten 2, Seitenwänden 3 und einer Lauffläche 4. Auf letzterer befindet sich ein erfindungsgemäßes Laufflächenprofil, das ausschließlich Napfreihen beinhaltet.

Im Laufflächen-Mittenbereich sind drei der Napfreihen X wie bereits in der Figur 1 näher erläutert, also mit jeweils einem in Umfangsrichtung verlaufenden Strang versenkter Kanäle zwischen den Näpfen einer Napfreihe, angeordnet. In einer im Bildvordergrund herausgegriffenen Zone sind die wichtigsten - infolge der Versenkung natürlich eigentlich unsichtbaren-Kanten dieser Kanäle durch dünne gestrichelte Linien angedeutet.

An beiden Rändern weist diese Lauffläche 4 zudem eine Vielzahl von im Wesentlichen axial verlaufenden weiteren Napfreihen XI, XII, XIII, XIV und XV auf. Diese in der Umfangsrichtung aufeinander folgenden Napfreihen XI, XII, XIII, XIV und XV sollen die Vielfalt der möglichen Ausführungsformen zeigen.

Dabei ist die Napfreihe XI in der Herstellung am anspruchsvollsten; abgesehen von ihrer Querausrichtung, der feineren Bemessung der Näpfe und der dichteren Aufeinanderfolge der Näpfe 11a bis 11f entspricht sie den drei in Umfangsrichtung (=Längsrichtung) verlaufenden Napfreihen X, die bereits zuvor erläutert wurden. Darüberhinaus ist eine solche Napfreihe XI in Figur 4a ganz rechts zu sehen.

Die Napfreihe XII unterscheidet sich von der Napfreihe XI dadurch, dass sie anstelle von Näpfen mit rechteckförmiger Draufsicht solche mit kreisförmiger Draufsicht hat. Noch wichtiger ist, dass hier überdies die die Näpfe miteinander verbindenden Kanäle nicht vollständig versenkt, sondern zur Laufflächenperipherie hin schlitzartig geöffnet sind. Dies erleichtert den Formenbau, verschlechtert allerdings auch deutlich die Positiv-Steifigkeit gegenüber einer Ausführung XI. Immerhin aber verbleibt gegenüber einer Ausführung einer Napfreihe gemäß XV ein höheres Positiv. Ein Schnitt durch einen solchen Kanal 22 quer zur Hauptlinie 12, wie ihn Figur 4a in der zweiten Napfreihe XII von rechts zeigt, ist von schlüssellochähnlicher Gestalt.

Die Napfreihe XIII zeigt wieder wie die Napfreihe XI rechteckförmige Näpfe. Wie bei der Napfreihe XII sind auch hier die die Näpfe miteinander verbindenden Kanäle 23 (siehe dazu näher Figur 4a) nicht vollständig versenkt, sondern zur Laufflächenperipherie hin schlitzartig geöffnet. Ein Schnitt durch einen solchen Kanal 23 quer zur Hauptlinie 13, wie ihn Figur 4a in der mittleren Napfreihe XIII zeigt, ist von abgerundet trapezförmiger Gestalt, wobei die Kanäle 23 im Bereich des Profilgrundes weiter sind als an der Laufflächenperipherie.

Die Napfreihe XIV, von der eine vergrößert in Figur 4a als zweite von links dargestellt ist, stimmt mit der Napfreihe XIII weitgehend überein; nur sind hier die Näpfe von sechseckförmiger Draufsicht.

Die letzte Napfreihe innerhalb einer solchen Periode von sich wiederholdenden, im Wesentlichen quer verlaufenden Napfreihen hat das Bezugszeichen XV. Wie schon bei der Napfreihe XII sind hier die Näpfe wiederum von kreisrunder Draufsicht. Hier sind die Kanäle 25 nicht nur nicht versenkt, sondern auch nicht, wie Figur 4a ganz links zeigt, hinterschnitten. Für eine solche Ausführung ist natürlich der Formenbau besonders billig und auch das Formschließen und Formöffnen erfolgt besonders leicht; allerdings ist die Drainage-Leistung einer solchen Ausführung von Napfreihen auch nur kaum höher als bei der zu Anfang vorgestellten, ambitioniertesten Napfreihe XI, dies aber bei höherem Positiv-Verlust und vor allem bei deutlich höherem Verlust von Positiv-Steifigkeit.

Figur 3 zeigt maßstabsgerecht einen anderen Fahrzeugluftreifen 1 für PKW mit einem erfindungsgemäßen Laufflächenprofil. In den Schultern stimmt dieses Profil mit dem nach Figur 2 weitgehend überein, zeigt also dort im wesentlichen axial verlaufende Napfreihen XI, XII, XIII, XIV und XV.

Ein Unterschied zeigt sich am axial inneren Rand der Schultern: Dort mündet jeweils ein Napf in eine Umfangsrille; dadurch erscheint dort der Napf als halb abgeschnitten. Dies begründet auch den einzigen Unterschied zwischen der Figur 4b, die eine solche Periode der Schulterprofilierung räumlich und in größerem Maßstabe zeigt, zur Figur 4a.

Der Mittenbereich der Lauffläche 4 des Reifens 1 gemäß Figur 3 ist zu den Schultern hin durch je eine Umfangsrille 7, 8 begrenzt. In der Mitte weist er eine weitere Umfangsrille 9 auf. Sowohl zwischen den Umfangsrillen 7 und 9 als auch zwischen den Umfangsrillen 9 und 8 ist jeweils eine Schar in Umfangsrichtung aufeinanderfolgender, im Wesentlichen quer verlaufender Napfreihen XVI auf. Deren Näpfe sind von kreisförmiger Draufsicht. Zwischen diesen Näpfen sind Kanäle 26 angeordnet, die einen trapezförmigen Querschnitt aufweisen und in der Peripherie enger sind als unten im Profilgrunde.

Der außergewöhnlich klein bemessene Quernegativanteil senkt das Laufgeräusch in Verbindung mit den auch schalldämpfend wirkenden Napfreihen XVI. Ferner zeigt sich ein hervorragender selbstschärfender Kantengriff, der die Wintertauglichkeit dieses Profiles erhöht. Weil die Umfangsrillen 7 bis 9 die Wasser- und Luftabfuhr in der Umfangsrichtung besorgen und im Wesentlichen kompressionsfrei auch auf nasser Straße bleiben, können hier alle Napfreihen im Wesentlichen axial ausgerichtet sein und stehen dennoch mit dem kompressionsfreien Raum außerhalb des Reifenlatsches in leitender Verbindung.

Die Figur 4a zeigt in einem vergrößerten Maßstabe einen Teil eines äußeren Positivstreifens des Reifens nach Figur 2 und Figur 4b analog in einem vergrößerten Maßstabe einen Teil eines äußeren Positivstreifens des Reifens nach Figur 3. Deren Inhalt ist bereits im Zusammenhang mit den Figuren 2 bzw. 3 erläutert.

Figur 5 zeigt ausschnittsweise eine Abwicklung eines anderen erfindungsgemäßen Profiles eines Laufstreifens 4, bei dem eine Schar an sich bekannter Querrillen 30 von einem in Umfangsrichtung verlaufenden, durchgehenden Strang aneinander anschließender Kanäle 27 gekreuzt werden und an jeder Kreuzungsstelle je ein Napf XVII angeordnet ist. Diese Näpfe XVII vergrößern das Wasseraufnahmevermögen im Laufflächenmittenbereich, aus dem heraus Wasser am schwierigsten abzuführen ist, weil von hieraus die Abfuhrwege am längsten sind. Die großzügig bemessenen Näpfe erlauben - wie schon in der diesbezüglich ähnlichen Ausführung nach Figur 1 - die Zwischenspeicherung beträchtlicher Wassermengen bis zu dem Zeitpunkt, wo der betreffende Napf die nachlaufende Grenze des Latsches überschreitet, also wieder von der Straße abhebt, den Napf also entleert.

Die in Umfangsrichtung verlaufenden, versenkten Kanäle 27, die einen Strang von Kanälen bilden, dienen dazu, um ohne weitere Vergrößerung dieser Näpfe XVII deren Wasseraufnahmevermögen noch weiter zu steigern und die Geräuschemission durch Luftsäulenverdrängung aus den kreuzenden Querrillen 30 gering zu halten; die Kanäle 27 entlüften nämlich die Näpfe XVII.

Die zur Napferzeugung in der Vulkanisationsform vorzusehenden Stifte bieten überdies den Raum, um daraus - am Beginn der Profilprägung - bzw. darein - am Ende der Vulkanisation - Bolzen zu schieben, die die Kanäle 27 erzeugen.

Figur 6 zeigt ausschnittsweise eine Abwicklung eines anderen erfindungsgemäßen Laufstreifenprofiles, bei dem zwei an sich bekannte Längsrillen 5, 6 von einer Schar in diagonaler Richtung verlaufender, durchgehender Stränge aneinander anschließender Kanäle gekreuzt werden und an jeder Kreuzungsstelle je ein Napf angeordnet ist,

Figur 7 zeigt ausschnittsweise eine Abwicklung eines anderen erfindungsgemäßen Laufstreifenprofiles mit vier an sich bekannten Längsrillen 40, 41, 42 und 43.

Dabei sind die beiden linken Längsrillen 40 und 41 durch eine linke Schar diagonal verlaufender, durchgehender Stränge aneinander anschließender Kanäle 28 mit dem linken Rand der Lauffläche verbunden. Nur an den Kreuzungsstellen dieser Kanalstränge mit der ganz linken Umfangsrille 40 ist je ein Napf der Napfreihe XVIII angeordnet.

Analog sind die beiden rechten Längsrillen 42 und 43 durch eine rechte Schar diagonal verlaufender, durchgehender Stränge aneinander anschließender Kanäle 29 mit dem rechten Rand der Lauffläche verbunden und nur an den Kreuzungsstellen dieser Kanalstränge mit der ganz rechten Umfangsrille 43 ist je ein Napf der Napfreihe XIX angeordnet.

Wie schon bei der Figur 6 - anders als bei allen vorhergehenden Figuren - sind die Näpfe auch hier in der Figur 7 nicht längs ihrer Hauptlinie, die mit der Mittellinie der jeweiligen Umfangsrille 5 bzw. 6 bzw. 40 bzw. 43 zusammenfällt und darum der Übersichtlichkeit halber nicht eingezeichnet ist, ausgerichtet, sondern quer dazu. Dies soll genauso die große Vielfalt möglicher Varianten der Erfindung aufzeigen wie die Tatsache, dass hier nicht an allen Kreuzungsstellen zwischen versenkten Kanälen und Rillen ein Napf angeordnet ist; vielmehr sind sowohl die Kreuzungsstellen zwischen den Kanälen 28 und der Rille 41 frei von Näpfen als auch die Kreuzungsstellen zwischen den Kanälen 29 und der Rille 42. Das Wesentliche der Erfindung ist, dass in einem Näpfe aufweisenden Laufflächenprofil die Näpfe durch Kanäle zu Napfreihen verbunden sind, wobei die Querschnittsfläche der Kanäle deutlich kleiner als die der Näpfe ist. Vorzugsweise durchsetzen diese Kanäle nur den Profilgrund, also nicht die Laufflächenperipherie. Solche Reifen sind in Vulkanisationsformen herstellbar, die ihre Gestalt während eines Reifenheizprozesses zweimal verändern. Solche Vulkanisationsformen enthalten napfprägende Stifte mit darin verschieblichen kanalprägenden Bolzen.

Die folgende Bezugszeichenliste ist Bestandteil der Beschreibung.

### Bezugszeichenliste:

- 1: Fahrzeugvollreifen (Figur 1) oder Fahrzeugluftreifen (Figuren 2 und 3)
- 2: Wülste von 1
- 3: Seitenwände von 1
- 4: profilierte Lauffläche von 1
- 5: linke Umfangsrille in 4 gemäß Figur 1 oder Figur 6
- 6: rechte Umfangsrille in 4 gemäß Figur 1 oder Figur 6
- 7: linke Umfangsrille in 4 gemäß Figur 3
- 8: rechte Umfangsrille in 4 gemäß Figur 3
- 9: mittlere Umfangsrille in 4 gemäß Figur 3
- 10: Hauptlinie der Napfreihe X (dick strichpunktiert in Figur 1)
- 10a: Napf aus der Napfreihe X
- 10b: Napf aus der Napfreihe X
- 10c: Napf aus der Napfreihe X
- 10d: Napf aus der Napfreihe X . . .
- . . . 11: Hauptlinie der Napfreihe XI (dick strichpunktiert in Figuren 4a und 4b)
- 11a: Napf aus der Napfreihe XI (Figuren 2 und 3)
- 11f: Napf aus der Napfreihe XI (Figuren 2 und 3)
- . . . 12: Hauptlinie der Napfreihe XII (dick strichpunktiert in Figuren 4a und 4b)
- 12a: Napf aus der Napfreihe XII (Figuren 4a und 4b)
- 12b: Napf aus der Napfreihe XII (Figuren 4a und 4b)
- . . .12f: Napf aus der Napfreihe XII (Figuren 4a und 4b)
- 13: Hauptlinie der Napfreihe XIII (dick strichpunktiert in Figuren 4a und 4b)
- 14: Hauptlinie der Napfreihe XIV (dick strichpunktiert in Figuren 4a und 4b)
- 15: Hauptlinie der Napfreihe XV (dick strichpunktiert in Figuren 4a und 4b)
- 16a: Napf aus der Napfreihe XVI
- 16b: Napf aus der Napfreihe XVI
- 16c: Napf aus der Napfreihe XVI
- 16d: Napf aus der Napfreihe XVI
- 17a: Napf aus der Napfreihe XVII
- 17b: Napf aus der Napfreihe XVII
- 17c: Napf aus der Napfreihe XVII
- 18a: Napf aus der Napfreihe XVIII
- 18b: Napf aus der Napfreihe XVIII
- 18c: Napf aus der Napfreihe XVIII
- 18d: Napf aus der Napfreihe XVIII
- 19a: Napf aus der Napfreihe XIX
- 19b: Napf aus der Napfreihe XIX
- 19c: Napf aus der Napfreihe XIX
- 19d: Napf aus der Napfreihe XIX
- 20: Kanäle zwischen Näpfen der Napfreihen X (dünn gestrichelt in einem Ausschnitt von Figur 2, der zwischen den beiden strichpunktierten Lupen VIa liegt)
- 21: Kanäle zwischen Näpfen der Napfreihen XI (Figuren 4a und 4b ganz rechts)
- 22: Kanäle zwischen Näpfen der Napfreihen XII (Figuren 4a und 4b zweite von rechts)
- 23: Kanäle zwischen Näpfen der Napfreihen XIII (Figuren 4a und 4b mitte)
- 24: Kanäle zwischen Näpfen der Napfreihen XIV (Figuren 4a und 4b zweite von links)
- 25: Kanäle zwischen Näpfen der Napfreihen XV (Figuren 4a und 4b ganz links)
- 26: Kanäle zwischen Näpfen der Napfreihen XVI (Figuren 4a und 4b ganz links)
- 27: in Umfangsrichtung verlaufende, aneinander anschließende Kanäle, die 30 kreuzen (Figur 5)
- 28: in diagonaler Richtung verlaufende, innerhalb von Strängen aneinander anschließende Kanäle, die Umfangsrille(n) kreuzen (nämlich 5 und 6 in Figur 6 und 40 in Figur 7)
- 29: in diagonaler Richtung verlaufende, innerhalb von Strängen aneinander anschließende Kanäle, die Umfangsrille(n) kreuzen (nämlich 43 in Figur 7)
- 30: an sich bekannte Querrillen 30 (Figur 5)
- 40: ganz links angeordnete Längsrille (Figur 7)
- 41: rechts von 40 angeordnete Längsrille (Figur 7)
- 42: links von 43 angeordnete Längsrille (Figur 7)
- 43: ganz rechts angeordnete Längsrille (Figur 7)

- X: in Umfangsrichtung verlaufende Napfreihe mit rechteckförmigen Näpfen, die jeweils durch einen Kanal von im Wesentlichen rechteckförmigern Querschnitt miteinander verbunden sind, der nur im Bereich des Profilgrundes existiert (Figuren 1 und 2)
- XI: Napfreihe analog X, jedoch im Wesentlichen axial verlaufend (Figuren 2 und 3, detailliert in Figur 4a bzw. Figur 4b)
- XII: im Wesentlichen axial verlaufende Napfreihe mit Näpfen von kreisförmiger Draufsicht, die durch einen Kanal von im Wesentlichen schlüssellochförmigem Querschnitt miteinander verbunden sind, wobei die Kanäle an der Laufflächenperipherie enger sind als im Profilgrunde (Figuren 2 und 3, detailliert in Figur 4a bzw. Figur 4b)
- XIII: im Wesentlichen axial verlaufende Napfreihe mit in der Draufsicht rechteckförmigen Näpfen, die durch einen Kanal von im Wesentlichen trapezförmigem Querschnitt miteinander verbunden sind, wobei die Kanäle an der Laufflächenperipherie enger sind als im Profilgrunde (Figuren 2 und 3, detailliert in Figur 4a bzw. Figur 4b)
- XIV: im Wesentlichen axial verlaufende Napfreihe mit in der Draufsicht sechseckförmigen Näpfen, die durch einen Kanal von im Wesentlichen trapezförmigem miteinander verbunden sind, wobei die Kanäle an der Laufflächenperipherie enger sind als im Profilgrunde (Figuren 2 und 3, detailliert in Figur 4a bzw. Figur 4b)
- XV: im Wesentlichen axial verlaufende Napfreihe mit in der Draufsicht rechteckförmigen Näpfen, die durch einen Kanal miteinander verbunden sind, wobei die Kanäle an der Laufflächenperipherie etwa genauso weit sind wie im Profilgrunde (Figuren 2 und 3, detailliert in Figur 4a bzw. Figur 4b)
- XVI: im Laufflächenmittenbereich zwischen je zwei Umfangsrillen 7-9 oder 9-8 angeordnete und in diese beidseitig mündende, im Wesentlichen axial verlaufende Napfreihe mit in der Draufsicht kreisförmigen Näpfen, die durch einen Kanal von trapezförmigem Querschnitt miteinander verbunden sind, wobei die Kanäle an der Laufflächenperipherie enger sind als im Profilgrunde (Figur 3)
- XVII: Napfreihe an Kreuzungsstellen zwischen 27 und 30 (Figur 5)
- XVIII: Napfreihe an Kreuzungsstelle zwischen 28 und 5 in Figur 6 bzw. zwischen 28 und 40 in Figur 7
- XIX: Napfreihe an Kreuzungsstelle zwischen 28 und 6 in Figur 6 bzw. zwischen 28 und 43 in Figur 7
- G: Gleitflächen von 70 und 71

## Patentansprüche

1. Laufflächenprofil für einen Fahrzeugreifen (1)
- mit einer oder mehreren Napfreihen (X und/oder XI, XII, XIII, XIV, XV und/oder XVI, XVII, XVIII, XIX)
- wobei jede Napfreihe (X, XI, XII, ..., XIX) einen oder mehrere Näpfe
(10a, 10b, 10c, 10d, ...;
11a, 11b, 11c, 11d, 11e; 11f;
12a, 12b, 12c, 12d, 12e, 12f
...
19a, 19b, 19c, 19d) aufweist,
- wobei ein jeder Napf (10a, 10b, ... 19c, 19d) ein Profilnegativ von einer Breite (b) oder Durchmesser (d) ist, die höchstens das 2-fache - bevorzugt etwa das 1,2-fache - der Profiltiefe (t) beträgt, wobei diese Breite (b) bzw. dieser Durchmesser (d) in der Ebene der Laufflächenperipherie senkrecht zur Hauptlinie (10, 11, 12, ..., 19) der jeweiligen Napfreihe (X, XI, XII, ..., XIX) zu messen ist,
- wobei die Länge (1) eines jeden Napfes (10a, 10b, ... 19c, 19d) entlang der jeweiligen Hauptlinie (10, 11, ..., 19) höchstens das 4-fache - bevorzugt etwa das 1,5-fache - der Profiltiefe (t) beträgt,
- wobei die Tiefe (t) besagter Näpfe (10a, 10b, ..., 19c, 19d) etwa der üblichen Profiltiefe für die jeweilige Reifenkategorie entspricht,
- und wobei die Näpfe (10a, 10b, ..., 19c, 19d), die zu einer Napfreihe (X, XI, . .., XIX) gehören, durch einen Kanal (20, 21, ..., 29) miteinander oder mit Profilrillen (7) oder mit einem Laufflächenrand verbunden sind,
- und wobei die Querschnittsfläche eines jeden solchen Kanals (20,21, ...,29), welche senkrecht zur Hauptlinie (10, 11, ..., 19) der jeweiligen Napfreihe (X, XI, ..., XIX) zu messen ist, zwischen 10 % und 50 % der Querschnittsfläche der jeweils anschließenden Näpfe (10a, 10b,....,19c, 19d) beträgt,
**dadurch gekennzeichnet**,
**dadurch gekennzeichnet, dass** der Kanal (20, 21,.....,29) eine trapezförmig Querschnittsfläche aufweist, wobei die beiden parallelen Trapezseiten parallel zur Peripherie der Lauffläche verlaufen und die kleinere der beiden parallelen Trapezseiten entweder der Peripherie der Lauffläche näher liegt oder an dieser liegt.

2. Laufflächenprofil nach Anspruch 1, **dadurch gekennzeichnet, dass** der Kanal (20 beziehungsweise 21 beziehungsweise ... 29),
der die Näpfe (10a, 10b, 10c, 10d, ...
beziehungsweise 11a, 11b,11 c, 11d, 11e und 11f;
beziehungsweise ...
beziehungsweise 19a, 19b, 19c, 19d)
einer Napfreihe
(X beziehungsweise XI beziehungsweise ... beziehungsweise XIX) miteinander oder mit Näpfen (18a, 18b, 18c, 18d) anderer Reihen oder mit den Laufflächenrändern verbindet,
nur unten, also in der Nähe der vollen Profiltiefe, existiert,
wohingegen oben, also in der Nähe der Peripherie der profilierten Lauffläche,
die Näpfe einer Napfreihe als voneinander isoliert, also als Sacknegative erscheinen.

3. Laufflächenprofil nach Anspruch 2, **dadurch gekennzeichnet,**
- **dass** es in an sich bekannter Weise Querrillen (30) enthält und zusätzlich im Wesentlichen in Umfangsrichtung verlaufende Kanäle (27), die diese Querrillen (30) kreuzen und nur unten in der Nähe der vollen Profiltiefe existieren, wobei zumindest an einigen Kreuzungsstellen zwischen einem solchen Kanal (27) und einer solchen Querrille (30) ein Napf (17a, 17b, 17c) angeordnet ist; oder
- **dass** es in an sich bekannter Weise Längsrillen (5, 6 ) enthält und zusätzlich im Wesentlichen in axialer oder diagonaler Richtung verlaufende Kanäle (28), die diese Längsrillen kreuzen und nur unten in der Nähe der vollen Profiltiefe existieren, wobei zumindest an einigen Kreuzungsstellen zwischen einem solchen Kanal (28) und einer solchen Längsrille (5, 6) ein Napf angeordnet ist.

## Claims

1. Tread profile for a vehicle tyre (1)
- with one or more rows of cup recesses (X and/or XI, XII, XIII, XIV, XV and/or XVI, XVII, XVIII, XIX)
- each row of cup recesses (X, XI, XII, ..., XIX) having one or more cup recesses (10a, 10b, 10c, 10d, ...;
11a, 11b, 11c, 11d, 11e, 11f;
12a, 12b, 12c, 12d, 12e, 12f
...
19a, 19b, 19c, 19d),
- each cup recess (10a, 10b, ... 19c, 19d) being a profile negative of a width (b) or diameter (d) which is at most 2 times - preferably approximately 1.2 times - the profile depth (t), it being required for this width (b) or this diameter (d) to be measured in the plane of the tread periphery perpendicularly in relation to the principal line (10, 11, 12, ..., 19) of the respective row of cup recesses (X, XI, XII, ..., XIX),
- the length (1) of each cup recess (10a, 10b, ... 19c, 19d) along the respective principal line (10, 11, ..., 19) being at most 4 times - preferably approximately 1.5 times - the profile depth (t),
- the depth (t) of said cup recesses (10a, 10b, ..., 19c, 19d) corresponding approximately to the customary profile depth for the respective category of tyre,
- and the cup recesses (10a, 10b, ... 19c, 19d) which belong to a row of cup recesses (X, XI, ..., XIX) being connected to one another or to profile grooves (7) or to an edge of the tread by a channel (20, 21, ..., 29),
- and the cross-sectional area of each and every such channel (20, 21, ..., 29), which is to be measured perpendicularly in relation to the principal line (10, 11, ..., 19) of the respective row of cup recesses (X, XI, ..., XIX), amounting to between 10% and 50% of the cross-sectional area of the respectively adjoining cup recesses (10a, 10b, ... 19c, 19d),
**characterized in that** the channel (20, 21, ..., 29) has a trapezoidal cross-sectional area, the two parallel sides of the trapezium running parallel to the periphery of the tread and the smaller of the two parallel sides of the trapezium either lying closer to the periphery of the tread or lying on the latter.

2. Tread profile according to Claim 1, **characterized in that** the channel (20 or 21 or... 29),
which connects the cup recesses (10a, 10b, 10c, 10d, ...
or 11a, 11b, 11c, 11d, 11e and 11f;
or...
or 19a, 19b, 19c, 19d)
of a row of cup recesses
(X or XI or ... or XIX)
to one another or to cup recesses (18a, 18b, 18c, 18d) of other rows or to the edges of the tread,
existing only at the bottom, that is in the vicinity of the full profile depth,
whereas at the top, that is in the vicinity of the periphery of the profiled tread, the cup recesses of a row of cup recesses appear as isolated from one another, that is as a negative of a recess.

3. Tread profile according to Claim 2, **characterized**
- **in that** it contains in a way known per se transverse grooves (30) and additionally channels (27) which run essentially in the circumferential direction, cross these transverse grooves (30) and exist only at the bottom, in the vicinity of the full profile depth, a cup recess (17a, 17b, 17c) being arranged at least at some crossing points between such a channel (27) and such a transverse groove (30); or
- **in that**, in a way known per se, it contains longitudinal grooves (5, 6) and additionally channels (28) which run essentially in an axial or diagonal direction, cross these longitudinal grooves and exist only at the bottom, in the vicinity of the full profile depth, a cup recess being arranged at least at some crossing points between such a channel (28) and such a longitudinal groove (5, 6).

## Revendications

1. Profil de surface de roulement d'un pneu (1) de véhicule automobile, qui présente:
- une ou plusieurs rangées (X et/ou XI, XII, XIII, XIV, XV et/ou XVI, XVII, XVIII, XIX) de godets,
- chaque rangée (X, XI, XII, ..., XIX) de godets présentant un ou plusieurs godets (10a, 10b, 10c, 10d, ...; 11a, 11b, 11c, 11d, 11e, 11f; 12a, 12b, 12c, 12d, 12e, 12f, ..., 19a, 19b, 19c, 19d),
- chaque godet (10a, 10b, ..., 19c, 19d) étant un profil creux dont la largeur (b) ou le diamètre (d) sont au maximum 2 fois et de préférence 1, 2 fois plus grands que la profondeur (t) du profil, cette largeur (b) ou ce diamètre (d) devant être mesuré dans le plan de la périphérie de la surface de roulement perpendiculairement à l'axe principal (10, 11, 12, ..., 19) de chaque rangée (X, XI, XII, ..., XIX) de godets,
- la longueur (1) de chaque godet (10a, 10b, ..., 19c, 19d) le long de chaque axe principal (10, 11, ..., 19) étant au maximum 4 fois, de préférence environ 1, 5 fois plus grande que la profondeur (t) du profil,
- la profondeur (t) desdits godets (10a, 10b, ..., 19c, 19d) correspondant environ à la profondeur habituelle des catégories de pneus respectives,
- un canal (20, 21, ..., 29) qui relie les godets (10a, 10b, ..., 19c, 19d) qui font partie d'une rangée (X, XI, ..., XIX) de godets les uns aux autres, à des rainures (7) du profil ou à un bord de la surface de roulement et
- la superficie de la section transversale de chacun de ces canaux (20, 21, ..., 29), qui doit être mesurée perpendiculairement à l'axe principal (10, 11, ..., 19) des rangées (X, XI, ..., XIX) respectives de godets, étant comprise entre 10 et 50 % de la superficie de la section transversale de chacun des godets (10a, 10b, ..., 19c, 19d) qui y sont raccordés,
**caractérisé en ce que** le canal (20, 21, ..., 29) présente une surface de section transversale en forme de trapèze, les deux côtés parallèles du trapèze s'étendant parallèlement à la périphérie de la surface de roulement et le plus petit des deux côtés parallèles du trapèze étant le plus proche de la périphérie de la surface de roulement ou étant situé sur celle-ci.

2. Profil de surface de roulement selon la revendication 1, **caractérisé en ce que** le canal (20, 21, ..., 29) respectif qui relie entre eux les godets (10a, 10b, 10c, 10d, ..., 11a, 11b, 11c, 11d, 11e et 11f, ..., 19a, 19b, 19c, 19d) respectifs d'une rangée (X, XI, ..., XIX) respective de godets ou les relie à des godets (18a, 18b, 18c, 18d) d'autres rangées ou aux bords de la surface de roulement n'est présent qu'en bas, à proximité du fond du profil alors que, en haut, c'est-à-dire à proximité de la périphérie de la surface profilée de roulement, les godets d'une rangée de godets apparaissent comme étant isolés les uns des autres, c'est-à-dire qu'ils apparaissent comme des creux aveugles.

3. Profil de surface de roulement selon la revendication 2, **caractérisé**
- **en ce qu'**il comprend des rainures transversales (30) d'une façon connue en soi et comprend en outre des canaux (27) qui s'étendent essentiellement dans la direction du pourtour, qui croisent ces rainures transversales (30) et qui ne sont présents qu'en bas, à proximité du fond du profil, un godet (17a, 17b, 17c) étant agencé en au moins certains des emplacements de croisement entre un tel canal (27) et une telle rainure (30) ou
- **en ce qu'**il comprend des rainures longitudinales (5, 6) d'une façon connue en soi et comprend en outre des canaux (28) qui s'étendent essentiellement dans la direction axiale ou dans la direction diagonale, qui croisent ces rainures longitudinales et ne sont présents qu'en bas, à proximité du fond du profil, un godet étant agencé en au moins certains des emplacements de croisement entre un tel canal (28) et une telle rainure longitudinale (5, 6).
